# EUROPEAN PATENT APPLICATION

(11) **EP 1 983 038 A1**
(43) Date of publication of application: **22.10.2008**
(21) Application number: 07425225.5
(22) Date of filing: 18.04.2007
(51) Int. Cl.: C09K 5/04, F01K 25/08, F01K 25/06

(54) **Turbo generator (orc) for applications at middle-low temperatures, using a fluid with azeotropic behaviour**

(71) Applicant: Turboden S.r.l., 25122 Brescia (IT)
(72) Inventor: Gaia, Mario c/o Turboden S.R.L., 25122 Brescia (IT)
(74) Representative: Sangiacomo, Fulvia

(57) **Abstract**

The invention concerns a system operating according to the Rankine cycle for the production of electrical or mechanical energy, starting from a medium to low temperature thermal energy source (12). As a work fluid in the Rankine cycle a mixture of Pentafluorobutanol and Perfluoropolyether is used containing about 65% in weight of Pentafluorobutanol and about 35% in weight of Perfluoropolyether to achieve azeotropic behaviour.

## Description

### Field of the Invention

This invention concerns systems for producing electric or mechanical energy using a Rankine cycle with organic work fluid, known technically in general as ORC (Organic Rankine Cycle).

### State of the Technique

The general objective of ORC systems is to transform thermal energy from a heat source characterised by limited power and temperature into mechanical and electrical energy.

In general these applications are characterised by low electrical power per unit (0,1-5MW) and by low temperature from the thermal energy source, usually between 100-300°C.

The success of the ORC machines depends very much on the choice of an appropriate work fluid, which can provide optimal thermodynamic, toxicological, environmental, cost and safety characteristics.

In this regard, the use, singularly however, of fluorocarbons, such as perflouropentane having good thermodynamic characteristics and which involve a small expansion work per unit mass, has already been proposed and put into operation, but the need to find other alternative work fluids still remains.

### Objective of the Invention

The invention has been conceived on the basis of such a requirement, and its principal objective is in fact to propose the use of a mixture made up of two compatible fluids with specific mixing ratios and parameters as a work fluid in a Rankine cycle for the realisation of a ORC system using this fluid mixture as a work fluid.

### Detailed Description of the Invention

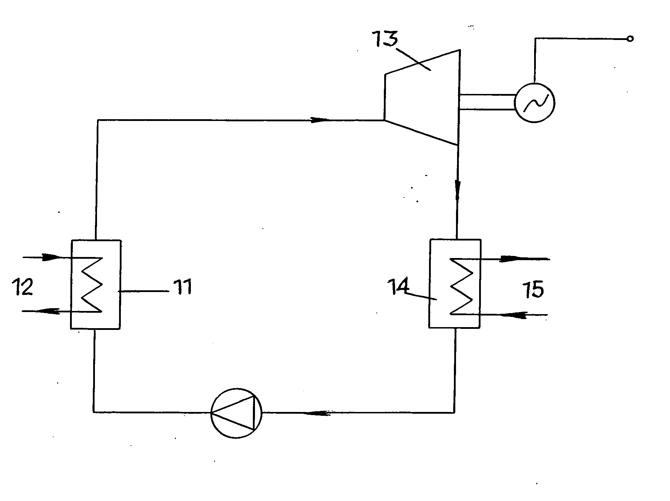

Greater details of the invention will become evident in the following description made in reference also to the enclosed drawing which shows, in diagram form, the main components of an ORC system. In fact, the drawing shows, only indicatively, an evaporator 11 for the work fluid acting as a heat exchange with a fluid source flowing in a respective circuit 12, a turbine 13 with its input connected to the outlet of said evaporator 11, and at least one condenser 14 positioned between the outlet of the turbine and the evaporator.

Every other component of the machine, such as a regenerator positioned upstream of the turbine with the objective of recovering the sensible heat of the expanded vapour has been omitted for simplicity and because it has no importance to the this description.

A primary heat source heats the work fluid flowing through the evaporator 11 until it evaporates.

The vapour generated in this way feeds the turbine 13 after which it passes through the condenser 14, where it yields its residual heat to an external fluid, for example water or air, passing in a respective circuit 15, condensing before it returns to the evaporator.

The innovative aspect of this invention consists in the use as a work fluid of a mixture of two fluids in an ORC system, that is in a Rankine cycle, and precisely:
- hexafluorobutanol, commercially available from Soc. SOLVAY under the trade name SOLKANE^{®} 365 mfc), for example,
- Perfluoropolyether, commercially available from Soc. SOLVAY under the trade name GALDEN^{®} HT55), for example,
where Soc. SOLVAY is intended as the abbreviation for the company name SOLVAY FLUOR GmbH -D-30173 Hanover, Germany.

The ratio of said fluids in the mixture can be from 55 to 70% in weight of Hexafluorobutanol and from 45 to 30% in weight of Perfluoropolyether.

More precisely however, their optimal ratio is to be taken as about 65% in weight of Hexafluorobutanol and about 35% in weight of Perfluoropolyether.

With this specific ratio in fact the resulting mixture has the behaviour of azeotrope mixtures, that is, a behaviour which from the evaporation and condensation point of view is analogous to that of pure fluids, where evaporation and condensation take place at a constant temperature even on variation of the fraction of fluid that changes phase, the temperature itself being in this case a function only of the pressure at which the change of state takes place.

From the thermodynamic point of view, the abovementioned mixture of two fluids in the proportion indicated above differ very little from the behaviour of fluorocarbons, such as the aforementioned perfluoropentane. It is therefore characterised by a small expansion operation per unit mass, by moderate evaporation heat and by a significant positive inclination of the top branch of the limit curve.

Compared to perfluorocarbons, the mixture of fluids proposed has in addition a density which is clearly less thanks to the presence of a fraction which is not fully fluoridated.

This advantageously reduces the fluid mass to be globally introduced into the ORC system and, correspondingly, the structural load of the heat exchangers 11, 14 due to the fluid mass present.

Furthermore compared to perfluoropentane, the condensation temperature at 1 bar is significantly higher: about 37°C against about 30° C for perfluoruropentane.

It will consequently be possible to operate at a pressure close to atmospheric pressure at a higher temperature and, hence, with a greater difference in temperature compared to the environment which will receive the condensation heat (whether it be water or air) through the system condenser 14.

A further advantage deriving from the use of the mixture according to the invention lies in the reduction of the atmospheric life of the fluid should it possibly leak out of the system and, consequently, in a reduction of the socalled GWP (Global Warming Potential), that is of the capacity to reduce heating of the atmosphere such as the greenhouse effect, compared to perfluorocarbons.

## Claims

1. A system operating according to the Rankine cycle for the production of electrical or mechanical energy, comprising a source of thermal energy at a low temperature, a primary heat exchanger between the thermal energy source and a work fluid for the evaporation of this work fluid, at least one turbine fed by work fluid vapour coming from said primary heat exchanger and connected to a respective power generator, and at least a condenser group connected to the outlet of said turbine for the condensation of the work fluid before it is recycled, **characterised in that** it uses a mixture of Pentafluorobutanol and Perfluoropolyether containing from 55 to 70% in weight of Pentafluorobutanol and from 30 to 45% in weight of Perfluoropolyether as work fluid.

2. A system according to claim 1, using a mixture containing about 65% in weight of Pentafluorobutanol and about 35% in weight of Perfluoropolyether as a work fluid so as to obtain azeotropic behaviour from said fluids.

3. An azeotropic mixture of Pentafluorobutanol and Perfluoropolyether in the ratio of about 65% and about 35%, respectively, for use as a work fluid in ORC systems for the production of energy.
